(19) Europäisches Patentamt
European Patent Office
Office européen des brevets

(11) **EP 3 827 501 B1**

(12) **FASCICULE DE BREVET EUROPEEN**

(45) Date de publication et mention de la délivrance du brevet:
**08.03.2023 Bulletin 2023/10**

(21) Numéro de dépôt: **19733523.5**

(22) Date de dépôt: **01.07.2019**

(51) Classification Internationale des Brevets (IPC):
*H02K 1/27* *(2006.01)*        *H02K 21/02* *(2006.01)*
*H02K 29/03* *(2006.01)*

(52) Classification Coopérative des Brevets (CPC):
**H02K 1/276; H02K 21/028; H02K 29/03;**
H02K 2213/03

(86) Numéro de dépôt international:
**PCT/EP2019/067566**

(87) Numéro de publication internationale:
**WO 2020/020581 (30.01.2020 Gazette 2020/05)**

(54) **ROTOR DE MACHINE ELECTRIQUE AVEC PONTS MAGNETIQUES ASYMETRIQUES**

ROTOR EINER ELEKTRISCHEN MASCHINE MIT ASYMMETRISCHEN MAGNETBRÜCKEN

ROTOR OF AN ELECTRICAL MACHINE WITH ASYMMETRIC MAGNETIC BRIDGES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.07.2018 FR 1856865**

(43) Date de publication de la demande:
**02.06.2021 Bulletin 2021/22**

(73) Titulaire: **IFP Energies nouvelles**
**92852 Rueil-Malmaison (FR)**

(72) Inventeurs:
• **VALIN, Thomas**
**92852 RUEIL-MALMAISON CEDEX (FR)**

• **GAUSSENS, Benjamin**
**92852 RUEIL-MALMAISON CEDEX (FR)**
• **CHAREYRON, Baptiste**
**92852 RUEIL-MALMAISON CEDEX (FR)**
• **ABDELLI, Abdenour**
**92852 RUEIL-MALMAISON CEDEX (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
EP-A1- 2 896 114        EP-A1- 3 300 231
CN-B- 105 914 925        DE-A1-102014 014 487

EP 3 827 501 B1

**Description**

La présente invention se rapporte à une machine électrique tournante synchro-réluctante (assistée par des aimants permanents), et concerne plus particulièrement un rotor d'une telle machine électrique qui fonctionne à une vitesse de rotation élevée sous un bus continu de faible tension.

Généralement, une telle machine électrique comporte un stator et un rotor disposés coaxialement l'un dans l'autre.

Le rotor est formé d'un empilage de tôles montées sur un arbre de rotor. Ces tôles comprennent des logements pour des aimants permanents et des perforations pour créer des barrières de flux permettant de diriger radialement le flux magnétique des aimants vers le stator et pour favoriser la création d'un couple reluctant.

Ce rotor est généralement logé à l'intérieur d'un stator qui porte des bobinages électriques permettant de générer un champ magnétique permettant d'entraîner en rotation le rotor.

Comme cela est mieux décrit dans la demande de brevet WO2016188764, le rotor comprend une pluralité d'évidements axiaux qui traversent les tôles de part en part.

Une première série d'évidements axiaux, disposés radialement les uns au-dessus des autres et à distance les uns des autres, forment des logements pour des générateurs de flux magnétiques, ici des aimants permanents sous forme de barreau rectangulaire.

L'autre série d'évidements consiste en des perforations de direction radiale inclinée, qui partent de ces logements pour arriver au voisinage du bord des tôles.

Les perforations inclinées sont disposées symétriquement par rapport aux logements des aimants de manière à former à chaque fois une figure géométrique sensiblement en forme de V à fond aplati avec le fond plat formé par le logement des aimants et avec les bras inclinés de ce V formés par les perforations. Il se crée ainsi des barrières de flux formées par les perforations. Le flux magnétique provenant des aimants ne peut alors que transiter par les parties pleines entre les perforations. Ces parties pleines sont constituées d'un matériau ferromagnétique. Pour cette configuration du rotor, on appelle alors pont magnétique l'épaisseur de matière entre les logements des aimants permanents et les barrières flux. Ces ponts magnétiques sont généralement fins, et doivent résister à des contraintes mécaniques (rupture, fatigue) élevées, ces contraintes augmentant notamment avec la vitesse de rotation du rotor.

La demande de brevet EP 2896114 propose de résoudre cette problématique par une orientation spécifique des ponts magnétiques. Toutefois, la géométrie proposée génère notamment des ondulations de couple et des harmoniques de force-contre-électromotrice.

En effet, il a été constaté que les harmoniques de force contre-électromotrice et l'ondulation du couple sont importantes dans ce type de machine synchrone à réluctance assistée par des aimants permanents.

Ceci peut générer des à-coups et des vibrations au niveau du rotor en entraînant un inconfort d'utilisation de cette machine.

Les demandes de brevet DE 102014014487, EP 3300231 et CN 105914925 décrivent des machines électriques.

La présente invention vise à remédier aux inconvénients énumérés ci-dessus, et notamment à réduire les contraintes mécaniques de rupture et de fatigue du rotor, tout en limitant l'ondulation du couple, les harmoniques de force contre-électromotrice et le bruit acoustique.

**Le dispositif selon l'invention**

La présente invention concerne un rotor pour machine électrique, ledit rotor comprend :

- un corps de rotor, formé par un empilage de tôles, de préférence placé sur un arbre de rotor et
- N paires de pôles magnétiques, chaque pôle magnétique est composé d'au moins trois aimants positionnés dans des évidements axiaux, et
- trois barrières de flux qui composent chaque pôle magnétique dont une barrière de flux externe, une barrière de flux centrale et une barrière de flux interne, chaque barrière de flux comprend deux évidements inclinés positionnés de part et d'autre de chaque évidement axial, chaque barrière de flux étant espacé dudit évidement axial par un pont magnétique ;

Ledit rotor comprend en outre :

- N pôles magnétiques primaires, et pour chaque pôle magnétique primaire, de part et d'autre dudit évidement axial, les ponts magnétiques internes, centraux et externes
- N pôles magnétiques secondaires, et pour chaque pôle magnétique secondaire, de part et d'autre dudit évidement axial, les ponts magnétiques internes, centraux et externes sont alignés selon un axe Δ2 formant un angle α2 par rapport à la direction radiale R2 dudit pôle magnétique primaire ;
- de telle sorte que les angles α1 et α2 vérifient l'équation suivante exprimée en degrés : α2 = α1 + 1 ± 0.5.

Selon un mode de réalisation de l'invention, ledit nombre N de paires de pôles est compris entre 2 et 9, de préférence entre 3 et 6, et vaut de manière préférée 4.

Avantageusement, ledit nombre N de paires de pôles vaut 4, et dans l'angle α2 est compris entre 16.1 et 16.2 °, et l'angle α1 est compris entre 14.6 et 14.7 °.

Conformément à une mise en oeuvre, lesdites barrières de flux ont sensiblement une forme de V à fond aplati.

Selon un aspect, l'épaisseur dudit pont magnétique interne est supérieure ou égale à l'épaisseur dudit pont magnétique central, qui est supérieure ou égale à l'épaisseur dudit pont magnétique externe.

Selon une caractéristique, les angles d'ouverture θ1, θ2, θ3 desdites barrières de flux desdits pôles magnétiques primaires sont supérieures aux angles d'ouverture θ1, θ2, θ3 desdites barrières de flux desdits pôles magnétiques secondaire.

En outre, l'invention concerne une machine électrique comprenant un stator et un rotor selon l'une des caractéristiques précédentes, le rotor étant logé à l'intérieur dudit stator.

Selon un mode de réalisation, ledit stator comprend une pluralité d'encoches radiales disposées circonférentiellement le long dudit stator.

Conformément à une mise en oeuvre, lesdites encoches s'étendent axialement le long dudit stator.

Avantageusement, ladite machine électrique est du type synchro-réluctante.

**Présentation succincte des figures**

D'autres caractéristiques et avantages du dispositif selon l'invention, apparaîtront à la lecture de la description ci-après d'exemples non limitatifs de réalisations, en se référant aux figures annexées et décrites ci-après.

La figure 1 illustre un rotor selon un mode de réalisation de l'invention.
La figure 2 illustre une machine électrique selon un mode de réalisation de l'invention.
La figure 3 illustre un rotor selon un autre mode de réalisation de l'invention.
La figure 4 illustre un logement d'un aimant d'un rotor selon un mode de réalisation de l'invention.
La figure 5 est un histogramme représentant le critère de Von Mises pour quatre zones définies en figure 4, pour un rotor selon l'art antérieur et pour un rotor selon l'invention.
La figure 6 représente des courbes de contraintes mécaniques (rupture et fatigue) en fonction d'un décalage angulaire des angles des ponts magnétiques.

**Description détaillée de l'invention**

La présente invention concerne un rotor pour une machine électrique, notamment une machine électrique du type synchro-réluctante. En outre, la présente invention concerne une machine électrique comprenant un rotor selon l'invention et un stator, le rotor étant disposé au sein du stator coaxialement à celui-ci.

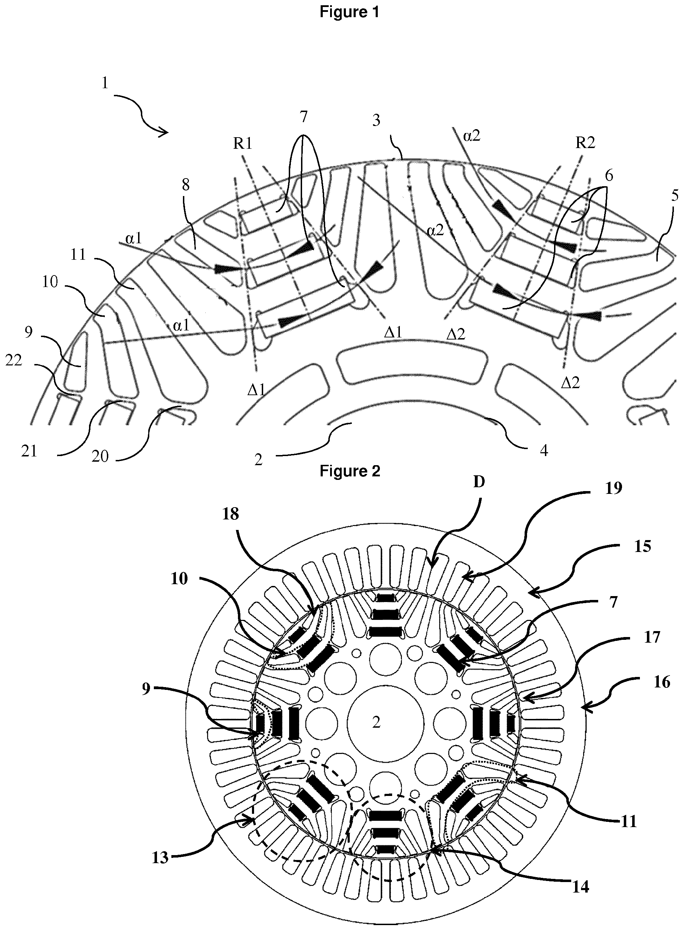

Comme illustré sur la figure 1 (de manière non limitative), un rotor 1 comporte de manière connue en soi, un arbre 2, de préférence magnétique, sur lequel est monté un empilage de tôles 3. Dans le cadre de l'invention, ces tôles 3 sont ferromagnétiques planes, identiques, laminées et de forme circulaire et sont assemblées les unes aux autres par tous moyens connus. Les tôles 3 comprennent un alésage central 4 traversé par l'arbre 2 de rotor et une pluralité d'évidements axiaux 5 qui traversent les tôles 3 de part en part.

Une première série d'évidements axiaux 6, disposés radialement les uns au-dessus des autres et à distance les uns des autres, forment des logements pour des générateurs de flux magnétiques, ici des aimants permanents 7 sous forme de barreau. Les évidements axiaux 6 forment sensiblement des trapèzes. Cependant, les évidements axiaux 6 peuvent prendre d'autres formes, notamment des formes rectangulaires, carrées, etc.

Une deuxième série d'évidements consiste en des perforations de direction inclinée 8 par rapport à la direction radiale, qui partent des évidements axiaux 6 pour arriver au voisinage du bord des tôles 3, c'est-à-dire au niveau d'un entrefer de la machine électrique.

Les perforations inclinées 8 sont disposées symétriquement par rapport aux évidements 6 des aimants 7 de manière à former à chaque fois une figure géométrique sensiblement en forme de V à fond aplati, avec le fond plat formé par le logement 6 des aimants 7 et avec les bras inclinés de ce V formés par les perforations inclinées 8. Les perforations inclinées 8 forment des barrières de flux. Le flux magnétique provenant des aimants 7 ne peut alors que transiter par les parties pleines des tôles 3 entre les évidements. Ces parties pleines sont constituées d'un matériau ferromagnétique (celui des tôles 3).

Selon l'invention, le rotor comprend N paires de pôles magnétiques (ou 2xN pôles magnétiques), un pôle magnétique étant formé des trois évidements 6 pour les aimants sur une même direction radiale, et les barrières de flux (9, 10, 11) associées. Avantageusement, N peut être compris entre 2 et 9, et de préférence N est compris entre 3 et 6, et vaut de manière préférée 4.

Pour l'exemple illustré des figures 1 et 2, le rotor 1 comprend huit pôles magnétiques (N = 4). Chaque pôle magnétique est composé de trois aimants permanents 7 positionnés dans les trois évidements axiaux 6 prévus pour loger les aimants permanents 7. Le rotor 1 est également composé de trois barrières de flux, dont une barrière de flux externe 9 (associée à l'évidement 6 externe, c'est-à-dire le plus proche de la périphérie du rotor 1), une barrière de flux centrale 10 (associée à l'évidement 6 central) et une barrière de flux interne 11 (associée à l'évidement 6 interne, c'est-à-dire le plus proche du centre du rotor 1).

Chaque barrière de flux (9, 10, 11) est espacée d'un évidement axial 6 par un pont magnétique (20, 21, 22). Un pont magnétique (20, 21, 22) est un pont de matière (c'est-à-dire une portion de matière de la tôle 3) entre deux évidements, qui permet d'une part la tenue mécanique du rotor 1, et d'autre part le passage du flux magnétique. De part et d'autre de chaque évidement axial 6, est donc prévu un pont magnétique (20, 21, 22). Chaque pôle magnétique comporte alors deux ponts magnétiques internes 20 (associés à l'évidement axial interne 6, c'est-à-dire l'évidement axial 6 le plus proche du centre du rotor, et à la barrière de flux magnétique interne 11), deux ponts magnétiques centraux 21 (associés à l'évidement axial central 6 et à la barrière de flux magnétique centrale 10), et deux ponts magnétiques externes 22 (associés à l'évidement axial externe 6, c'est-à-dire l'évidement axial 6 le plus proche de la périphérie du rotor et à la barrière de flux magnétique externe 9).

Dans le cadre de l'invention, le rotor 1 comprend deux architectures distinctes de pôles magnétiques. A cet effet, il comprend N pôles magnétiques primaires 13 et N pôles magnétiques secondaires 14. Le rotor comporte une alternance de pôles magnétiques primaires 13 et de pôles magnétiques secondaires 14. Pour les exemples des figures 1 et 2, le rotor 1 comporte quatre pôles magnétiques primaires 13 et quatre pôles magnétiques secondaires 14.

Selon l'invention, pour chaque pôle magnétique primaire 13, de part et d'autre des évidements axiaux 6, les ponts magnétiques interne 20, central 21 et externe 22 sont alignées selon un axe $\Delta 1$ formant un angle $\alpha 1$ non nul par rapport à la direction radiale R1 du pôle magnétique primaire 13.

De plus, pour chaque pôle magnétique secondaire 14, de part et d'autre des évidements axiaux 6, les ponts magnétiques interne 20, central 21 et externe 22 sont alignées selon un axe $\Delta 2$ formant un angle $\alpha 2$ non nul par rapport à la direction radiale R2 du pôle magnétique secondaire 14.

En outre, les angles $\alpha 1$ et $\alpha 2$ sont choisis de manière à vérifier l'égalité suivante : $\alpha 2 = \alpha 1 + 1 \pm 0.5$. Dans la présente demande X +/- Y (avec X et Y des nombres positifs), signifie un intervalle centré sur la valeur X, l'intervalle étant compris entre les valeurs X-Y et X+Y, bornes comprises.

De manière avantageuse, les angles $\alpha 1$ et $\alpha 2$ peuvent compris entre 10 et 20 °.

En d'autres termes, les ponts magnétiques (20, 21, 22) de chaque côté des évidements axiaux 6 sont positionnés sur des droites $\Delta 1$ ou $\Delta 2$. Ces droites $\Delta 1$ ou $\Delta 2$ étant sécantes avec des rayons du rotor R1 ou R2 de manière à former les angles $\alpha 1$ ou $\alpha 2$, ces deux angles étant distincts. De préférence, les droites $\Delta 1$ ou $\Delta 2$ passent par les extrémités latérales des évidements axiaux 6. Avantageusement, chaque pôle magnétique possède une architecture symétrique par rapport à la direction radiale R1 ou R2 du pôle. En d'autres termes, les barrières de flux (9, 10, 11) et les ponts magnétiques (20, 21, 22) sont symétriques par rapport à la direction radiale R1 ou R2. Ainsi, l'angle $\alpha 1$ ou $\alpha 2$ d'un côté du pôle magnétique est identique à l'angle $\alpha 1$ ou $\alpha 2$ de l'autre côté du même pôle magnétique.

Cette configuration assure d'une part une dissymétrie des pôles magnétiques primaires et des pôles magnétiques secondaires, et permet d'autre part de garantir une bonne résistance mécanique à la rupture et à la fatigue du rotor, même pour des vitesses de rotation élevées, grâce à une homogénéisation des efforts dans le matériau.

Pour le mode de réalisation non limitatif des figures 1 et 2 pour lequel N=4, l'angle $\alpha 2$ peut être compris entre 16.1 et 16.2 °, et l'angle $\alpha 1$ peut être compris entre 14.6 et 14.7 °. De préférence, l'angle $\alpha 2$ peut valoir 16.15°, et l'angle $\alpha 1$ peut valoir 14.65°.

Conformément à une mise en oeuvre de l'invention, l'épaisseur du pont magnétique interne 20 est supérieure ou égale à l'épaisseur du pont magnétique central 21, qui est supérieure ou égale à l'épaisseur du pont magnétique externe 22. Cette configuration permet une bonne tenue mécanique du rotor. En effet, les efforts sont plus importants au niveau du pont magnétique interne 20 que sur le pont magnétique externe 22.

De manière avantageuse, les épaisseurs des ponts magnétiques peuvent être comprises entre 0.65 mm et 1 mm, de manière à satisfaire les contraintes mécaniques.

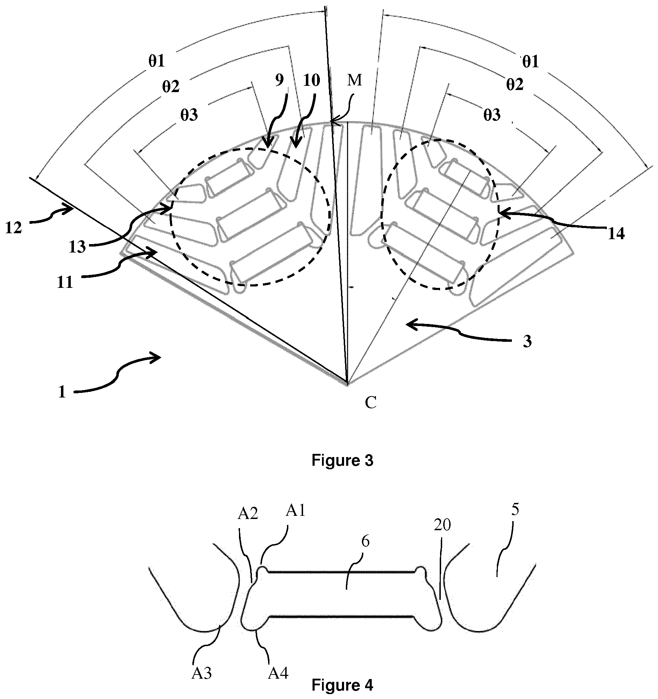

La figure 3 illustre, schématiquement et de manière non limitative, une portion d'un rotor 1 avec trois paires de pôles (N=3) selon un mode de réalisation de l'invention.

A chaque barrière de flux (9, 10, 11) de chaque pôle magnétique correspond un angle d'ouverture ($\theta 1$, $\theta 2$, $\theta 3$) qui qualifie l'ouverture de la forme en V. Ces angles d'ouverture correspondent à l'angle entre deux droites passant chacune par le centre C du rotor 1 et par un point milieu M positionné au niveau d'une face externe des perforations de direction radiale inclinée 8 de chaque barrière de flux. Cette face externe se situe à la périphérie du rotor 1, au niveau d'un entrefer mécanique de la machine électrique.

Selon un mode de réalisation de l'invention, les angles d'ouverture ($\theta 1$, $\theta 2$, $\theta 3$) des barrières de flux (9, 10, 11) des pôles magnétiques primaires 13 peuvent être supérieures au angles d'ouverture ($\theta 1$, $\theta 2$, $\theta 3$) des barrières de flux (9, 10, 11) des pôles magnétiques secondaires 14. Ainsi, l'architecture des pôles magnétiques secondaires 14 est différente de l'architecture des pôles magnétiques primaires 13. Les angles d'ouverture ($\theta 1$, $\theta 2$, $\theta 3$) peuvent alors être choisis de manière à minimiser les ondulations de couple et les harmoniques de force contre-électromotrice et le bruit acoustique. En effet, il se crée ainsi des barrières de flux asymétriques entre deux pôles consécutifs. Le flux magnétique provenant des aimants ne peut alors que transiter par les parties pleines entre les perforations et permet de réduire l'ondulation du couple, les harmoniques de force contre-électromotrice et le bruit acoustique.

Ce mode de réalisation est particulièrement adapté à l'invention. En effet, ainsi, les angles des ponts magnétiques et les angles d'ouverture des barrières de flux sont différents entre un pôle magnétique primaire et un pôle magnétique secondaire. De cette manière, il est possible de limiter les contraintes mécaniques dans le rotor tout en limitant les ondulations de couple.

Comme visible sur la figure 2, qui illustre, schématiquement et de manière non limitative, une machine électrique tournante conforme à un mode de réalisation de l'invention (ici une machine synchrone à réluctance variable assistée d'aimant permanent), la machine électrique comprend également un stator 15 imbriqué autour du rotor 1 de manière coaxiale.

Le stator 15 comprend une bague annulaire 16 avec une paroi interne 17 dont le diamètre intérieur est prévu pour recevoir le rotor 1 avec un espace nécessaire pour réaliser un entrefer 18. Cette bague comprend une multiplicité d'encoches (perçages), ici de section oblongue, qui forment des encoches 19 pour les bobinages d'induit.

Plus précisément, ces perçages s'étendent axialement tout au long du stator 15 en étant disposés radialement sur la bague tout en étant placés circonférentiellement à distance les uns des autres d'une distance D. Le nombre d'encoches est prédéterminé en fonction des caractéristiques de la machine électrique, et en fonction du nombre N de paires de pôles. Pour l'exemple illustré de la figure 2, pour lequel le nombre de paires de pôles N vaut 4, il y a 48 encoches.

Selon un exemple de réalisation, le stator peut avoir un diamètre extérieur compris entre 100 et 300 mm, et de préférence environ 140 mm et un diamètre intérieur compris entre 50 et 200 mm, de préférence environ 95 mm. La longueur de l'entrefer 18 de la machine électrique peut être comprise entre 0.4 et 0.8 mm, de préférence entre 0.5 et 0.6 mm.

Comme il va de soi, l'invention ne se limite pas à la seule forme de réalisation des évidements, décrits ci-dessus à titre d'exemple, elle embrasse au contraire toutes les variantes de réalisation.

La figure 4 illustre, schématiquement et de manière non limitative, un logement d'un aimant d'un rotor selon un mode de réalisation de l'invention. Il peut s'agir d'un évidement axial interne 6. Cet évidement axial 6, destiné à recevoir un aimant, a une forme générale sensiblement trapézoïdale, avec différents congés à ses quatre coins. Les congés peuvent être choisis de manière à optimiser les contraintes mécaniques dans la tôle. Toutefois, l'évidement axial peut avoir d'autres formes, et/ou d'autres congés. De part et d'autre de l'évidement axial 6, se trouvent deux perforations inclinées 5, qui forment les barrières de flux. Entre l'évidement axial 6 et les perforations inclinées 5 sont prévus deux ponts magnétiques 20.

Sur cette figure 4, ont été également représentées quatre zones A1, A2, A3 et A4, qui sont des zones de la tôle de rotor 1 entre l'évidement axial 6 et les perforations inclinées 5.

Pour ces quatre zones A1 à A4, un critère de contrainte mécanique de Von Mises a été calculé pour une machine électrique selon l'art antérieur avec des ponts magnétiques symétriques entre les pôles ($\alpha1=\alpha2$) et pour une machine électrique selon l'invention avec des ponts magnétiques asymétriques entre les pôles, en particulier selon la configuration de la figure 1 avec $\alpha1=14.65°$ et $\alpha2=16.15°$. Les deux machines électriques comparées sont identiques à l'exception des angles $\alpha1$ et $\alpha2$.

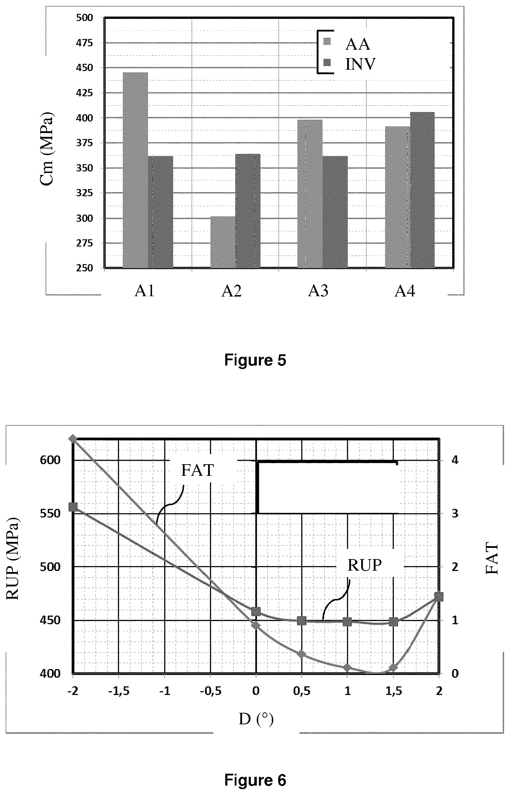

La figure 5 est un histogramme illustrant la comparaison de ce critère de contrainte de Von Mises Cm en MPa entre la machine électrique selon l'art antérieur AA, et la machine électrique selon l'invention INV, pour les quatre zones A1 à A4 définies sur la figure 4. Ainsi, on observe que les ponts magnétiques tels que définis selon l'invention permettent d'homogénéiser les efforts dans le matériau. De plus, on remarque que la contrainte maximale selon ce critère est supérieur pour l'art antérieur (445 MPa) par rapport à l'invention (406 MPa).

La figure 6 représente une courbe représentative de la contrainte mécanique de rupture RUP en MPa (obtenu selon le critère de Von Mises) et une courbe représentative de la contrainte mécanique de fatigue FAT (sans unité et obtenu selon le critère de Haigh et de Goodman) en fonction du décalage angulaire D en degré (°) entre les angles $\alpha1$ et $\alpha2$ (D=$\alpha2$-$\alpha1$), pour un rotor d'une machine électrique selon le mode de réalisation de la figure 1. On observe qu'un décalage angulaire compris en 0.5 ° et 1.5° permet de réduire à la fois les contraintes mécaniques de rupture et les contraintes mécanique de fatigue sur le rotor. Par conséquent, l'invention qui définit une relation entre les angles $\alpha2 = \alpha1 + 1 \pm 0.5$ permet bien de réduire les contraintes mécaniques de rupture et de fatigue sur le rotor, en particulier par rapport à un rotor pour lequel les ponts magnétiques seraient identiques pour les pôles magnétiques primaires et les pôles magnétiques secondaires (D= 0 car $\alpha1=\alpha2$).

Ainsi, le rotor selon l'invention est adapté à machine électrique synchro-réluctante qui fonctionne avec un bus continu faible tension qui permet une vitesse de rotation élevée (supérieure à 15 000 tr/min).

**Revendications**

1. Rotor (1) pour machine électrique, ledit rotor (1) comprend :

   - un corps de rotor, formé par un empilage de tôles (3), de préférence placé sur un arbre de rotor (2) et
   - N paires de pôles magnétiques, chaque pôle magnétique est composé d'au moins trois aimants (7) positionnés dans des évidements axiaux (6), et
   - trois barrières de flux qui composent chaque pôle magnétique dont une barrière de flux externe (9), une barrière de flux centrale (10) et une barrière de flux interne (11), chaque barrière de flux (9, 10, 11) comprend deux évidements inclinés (8) positionnés de part et d'autre de chaque évidement axial (6), chaque barrière de flux (9, 10, 11) étant espacé dudit évidement axial (6) par un pont magnétique (20, 21, 22) ;

**caractérisé en ce que** ledit rotor (1) comprend en outre :

- N pôles magnétiques primaires (13), et pour chaque pôle magnétique primaire (13), de part et d'autre dudit évidement axial (6), les ponts magnétiques internes (20), centraux (21) et externes (22) sont alignés selon un axe Δ1 formant un angle α1 par rapport à la direction radiale R1 dudit pôle magnétique primaire ;
- N pôles magnétiques secondaires (14), et pour chaque pôle magnétique secondaire (14), de part et d'autre dudit évidement axial (6), les ponts magnétiques internes (20), centraux (21) et externes (22) sont alignés selon un axe Δ2 formant un angle α2 par rapport à la direction radiale R2 dudit pôle magnétique primaire ;
- de telle sorte que les angles α1 et α2 vérifient l'équation suivante exprimée en degrés :

$$\alpha2 = \alpha1 + 1 \pm 0.5.$$

2. Rotor (1) selon la revendication 1, dans lequel ledit nombre N de paires de pôles est compris entre 2 et 9, de préférence entre 3 et 6, et vaut de manière préférée 4.

3. Rotor (1) selon l'une des revendications précédentes, dans lequel ledit nombre N de paires de pôles vaut 4, et dans lequel l'angle α2 est compris entre 16.1 et 16.2 °, et l'angle α1 est compris entre 14.6 et 14.7 °.

4. Rotor (1) selon l'une des revendications précédentes, dans lequel lesdites barrières de flux (9, 10, 11) ont sensiblement une forme de V à fond aplati.

5. Rotor (1) selon l'une des revendications précédentes, dans lequel l'épaisseur dudit pont magnétique interne (20) est supérieure ou égale à l'épaisseur dudit pont magnétique central (21), qui est supérieure ou égale à l'épaisseur dudit pont magnétique externe (22).

6. Rotor (1) selon l'une des revendications précédentes, dans lequel les angles d'ouverture θ1, θ2, θ3 desdites barrières de flux (9, 10, 11) desdits pôles magnétiques primaires (13) sont supérieures aux angles d'ouverture θ1, θ2, θ3 desdites barrières de flux (9, 10, 11) desdits pôles magnétiques secondaire (14), lesdites angles d'ouverture θ1, θ2, θ3 desdites barrières de flux correspondant à l'angle entre deux droites passant chacune par le centre C du rotor (1) et par un point milieu M positionné au niveau d'une face externe des perforations de direction radiale inclinée (8) de chaque barrière de flux (9, 10, 11).

7. Machine électrique **caractérisée en ce qu'**elle comprend un stator (15) et un rotor (1) selon l'une des revendications précédentes, le rotor (1) étant logé à l'intérieur dudit stator (15).

8. Machine électrique selon la revendication 7, dans laquelle ledit stator (15) comprend une pluralité d'encoches (19) radiales disposées circonférentiellement le long dudit stator (15).

9. Machine électrique selon la revendication 8, dans laquelle lesdites encoches (19) s'étendent axialement le long dudit stator (15).

10. Machine électrique selon l'une des revendications 7 à 9, dans laquelle ladite machine électrique est du type synchro-réluctante.

**Patentansprüche**

1. Rotor (1) für eine elektrische Maschine, wobei der Rotor (1) Folgendes umfasst:

- einen Rotorkörper, der von einem Blechstapel (3) gebildet ist, der vorzugsweise auf einer Rotorwelle (2) platziert ist, und
- N Magnetpolpaare, wobei jeder Magnetpol aus wenigstens drei Magneten (7) zusammengesetzt ist, die in axialen Ausnehmungen (6) positioniert sind, und
- drei Flusssperren, die jeden Magnetpol bilden, davon eine äußere Flusssperre (9), eine mittlere Flusssperre (10) und eine innere Flusssperre (11), wobei jede Flusssperre (9, 10, 11) zwei geneigte Ausnehmungen (8) umfasst, die beiderseits jeder axialen Ausnehmung (6) positioniert sind, wobei jede Flusssperre (9, 10, 11) durch eine Magnetbrücke (20, 21, 22) von der axialen Ausnehmung (6) beabstandet ist;

**dadurch gekennzeichnet, dass** der Rotor (1) ferner Folgendes umfasst:

- N Primärmagnetpole (13), und für jeden Primärmagnetpol (13) sind beiderseits der axialen Ausnehmung (6) die inneren (20), mittleren (21) und äußeren (22) Magnetbrücken entlang einer Achse Δ1 ausgerichtet, wobei sie einen Winkel α1 zur Radialrichtung R1 des Primärmagnetpols bilden;
- N Sekundärmagnetpole (14), und für jeden Sekundärmagnetpol (14) sind beiderseits der axialen Ausnehmung (6) die inneren (20), mittleren (21) und äußeren (22) Magnetbrücken entlang einer Achse Δ2 ausgerichtet, wobei sie einen Winkel ∝2 zur Radialrichtung R2 des Primärmagnetpols bilden;

- so dass die Winkel $\alpha$1 und $\alpha$2 die folgende Gleichung erfüllen, die in Grad ausgedrückt ist:

$$\alpha2 = \alpha1 + 1 \pm 0,5.$$

2. Rotor (1) nach Anspruch 1, wobei die Anzahl N von Polpaaren zwischen 2 und 9, vorzugsweise zwischen 3 und 6 beträgt und bevorzugt 4 ist.

3. Rotor (1) nach einem der vorhergehenden Ansprüche, wobei die Anzahl N von Polpaaren 4 ist, und wobei der Winkel ∝2 zwischen 16,1 und 16,2° und der Winkel $\alpha$1 zwischen 14,6 und 14,7° beträgt.

4. Rotor (1) nach einem der vorhergehenden Ansprüche, wobei die Flusssperren (9, 10, 11) im Wesentlichen eine V-Form mit abgeflachtem Boden aufweisen.

5. Rotor (1) nach einem der vorhergehenden Ansprüche, wobei die Dicke der inneren Magnetbrücke (20) größer als oder gleich der Dicke der mittleren Magnetbrücke (21) ist, die größer als oder gleich der Dicke der äußeren Magnetbrücke (22) ist.

6. Rotor (1) nach einem der vorhergehenden Ansprüche, wobei die Öffnungswinkel θ1, θ2, θ3 der Flusssperren (9, 10, 11) der Primärmagnetpole (13) größer als die Öffnungswinkel θ1, θ2, θ3 der Flusssperren (9, 10, 11) der Sekundärmagnetpole (14) sind, wobei die Öffnungswinkel Θ1, Θ2, Θ3 der Flusssperren dem Winkel zwischen zwei Geraden entsprechen, die jeweils durch das Zentrum C des Rotors (1) und durch einen Mittelpunkt M verlaufen, der an einer Außenseite der Perforationen mit geneigter Radialrichtung (8) jeder Flusssperre (9, 10, 11) positioniert ist.

7. Elektrische Maschine, **dadurch gekennzeichnet, dass** sie einen Stator (15) und einen Rotor (1) nach einem der vorhergehenden Ansprüche umfasst, wobei der Rotor (1) im Inneren des Stators (15) aufgenommen ist.

8. Elektrische Maschine nach Anspruch 7, wobei der Stator (15) eine Mehrzahl von radialen Nuten (19) umfasst, die in Umfangsrichtung den Stator (15) entlang angeordnet sind.

9. Elektrische Maschine nach Anspruch 8, wobei sich die Nuten (19) axial den Stator (15) entlang erstrecken.

10. Elektrische Maschine nach einem der Ansprüche 7 bis 9, wobei die elektrische Maschine vom Synchron-Reluktanz-Typ ist.

**Claims**

1. Rotor (1) for an electric machine, said rotor (1) comprising:

    - a rotor body, formed by a stack of laminations (3), which is preferably placed on a rotor shaft (2) and
    - N pairs of magnetic poles, each magnetic pole being made up of at least three magnets (7) positioned in axial recesses (6), and
    - three flux barriers that make up each magnetic pole, including one external flux barrier (9), one central flux barrier (10) and one internal flux barrier (11), each flux barrier (9, 10, 11) comprising two inclined recesses (8) that are positioned on either side of each axial recess (6), each flux barrier (9, 10, 11) being spaced apart from said axial recess (6) by a magnetic bridge (20, 21, 22);

    **characterized in that** said rotor (1) also comprises:

    - N primary magnetic poles (13), and for each primary magnetic pole (13), on either side of said axial recess (6), the internal magnetic bridges (20), central magnetic bridges (21) and external magnetic bridges (22) are aligned along an axis Δ1 forming an angle $\alpha$1 with respect to the radial direction R1 of said primary magnetic pole;
    - N secondary magnetic poles (14), and for each secondary magnetic pole (14), on either side of said axial recess (6), the internal magnetic bridges (20), central magnetic bridges (21) and external magnetic bridges (22) are aligned along an axis Δ2 forming an angle $\alpha$2 with respect to the radial direction R2 of said primary magnetic pole;
    - such that the angles $\alpha$1 and $\alpha$2 satisfy the following equation expressed in degrees: $\alpha2 = \alpha1 + 1 \pm 0.5$.

2. Rotor (1) according to Claim 1, wherein said number N of pairs of poles is between 2 and 9, preferably between 3 and 6, and is preferably equal to 4.

3. Rotor (1) according to either of the preceding claims, wherein said number N of pairs of poles is equal to 4, and wherein the angle $\alpha$2 is between 16.1 and 16.2°, and the angle $\alpha$1 is between 14.6 and 14.7°.

4. Rotor (1) according to one of the preceding claims, wherein said flux barriers (9, 10, 11) have substantially the shape of a flat-bottomed V.

5. Rotor (1) according to one of the preceding claims, wherein the thickness of said internal magnetic bridge (20) is greater than or equal to the thickness of said central magnetic bridge (21), which is greater than or equal to the thickness of said external magnetic bridge (22).

6. Rotor (1) according to one of the preceding claims, wherein the opening angles $\Theta1$, $\Theta2$, $\Theta3$ of said flux barriers (9, 10, 11) of said primary magnetic poles (13) are greater than the opening angles $\Theta1$, $\Theta2$, $\Theta3$ of said flux barriers (9, 10, 11) of said secondary magnetic poles (14), said opening angles $\Theta1$, $\Theta2$, $\Theta3$ of said flux barriers corresponding to the angle between two straight lines each passing through the centre C of the rotor (1) and through a midpoint M positioned on an external face of the perforations of inclined radial direction (8) of each flux barrier (9, 10, 11).

7. Electric machine, **characterized in that** it comprises a stator (15) and a rotor (1) according to one of the preceding claims, the rotor (1) being housed inside said stator (15).

8. Electric machine according to Claim 7, wherein said stator (15) comprises a plurality of radial slots (19) disposed circumferentially along said stator (15).

9. Electric machine according to Claim 8, wherein said slots (19) extend axially along said stator (15).

10. Electric machine according to one of Claims 7 to 9, wherein said electric machine is of the synchronous reluctance type.

**Figure 1**

**Figure 2**

θ1
θ2
θ3
9  10  M
θ1
θ2
θ3

12
13
11
14

1
3

C

**Figure 3**

A2  A1
5
6
20

A3  A4  **Figure 4**

Figure 5

Figure 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016188764 A
- EP 2896114 A
- DE 102014014487
- EP 3300231 A
- CN 105914925